# EUROPEAN PATENT APPLICATION

(11) **EP 0 646 434 A1**
(43) Date of publication of application: **05.04.1995**
(21) Application number: 94910044.0
(22) Date of filing: 17.03.1994
(51) Int. Cl.: B23K 26/00, B23K 26/08

(54) **LASER BEAM MACHINING METHOD AND APPARATUS THEREFOR**

(30) Priority: 25.03.1993 JP 65816/93
(71) Applicant: FANUC LTD., Minamitsuru-gun, Yamanashi 401-05 (JP)
(72) Inventor: NAKATA, Yoshinori Fanuc Mansion Harimomi 4-206, Yamanashi 401-05 (JP)
(74) Representative: Jackson, Peter Arthur
(86) International application number: JP9400443
(87) International publication number: WO9421417

(57) **Abstract**

A laser beam machining method capable of preventing the occurrence of a notch portion (burn-through) at a machining terminating point on a product even when a work is machined into a shape in which a machining starting point and machining terminating point agree with each other, and an apparatus used therefor. A boring and periphery machining operations are started with a boring operation at a point P, and a cutting operation is then carried out from the point P to a point Q. A periphery machining operation is started at the point Q, and this cutting operation is carried out along a path 40 up to a point R. At the point R, the machining conditions are changed, and the laser beam reaches a point S, at which the periphery machining operation is completed. In order to carry out this boring and periphery machining operations, a CNC (10) subtracts a very short distance ΔL1 between the points Q, S from a one-round machining path which starts at the point Q, to generate the machining path 40, which is then stored in a memory. This very short distance ΔL1 is set to such a level that permits the portion of the work which is on the inner side of the periphery thereof to be removed speedily at the time of completion of the periphery machining operation. Since the machining finishing point S is set by subtracting the very short distance ΔL1 from a one round machining path without having the starting and finishing points Q, S of the periphery machining operation agree with each other, the occurrence of a notch portion, which is encountered in a machining operation in which the starting and finishing points Q, S agree with each other, can be avoided.

## Description

### Technical Field

This invention relates to a laser-beam machining method of machining a workpiece by irradiating a laser beam thereon and a system therefor, and more particularly to a laser-beam machining method suitable for machining a shape having a machining start point and a machining end point coincident with each other.

### Background Art

Conventionally, when a workpiece is machined to a shape by a laser beam along a machining path having a start point and an end point coincident with each other, such as hole cutting, cutting of the shape is actually started at the start point of the machining path and ended at the end point which is coincident with the start point.

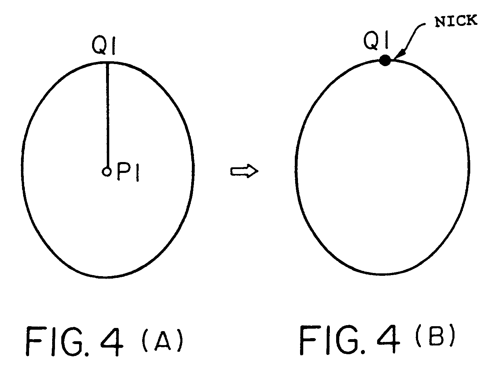

Now, a conventional process for cutting a hole will be described with reference to FIG. 4(A) and FIG. 4(B). As shown in FIG. 4(A), the hole-cutting process is conventionally started by piercing at a point P1, from which cutting is performed to a point Q1. Then, hole-circumference cutting is started at the point Q1 and continued, making one turn around the circumference of the hole, back to the point Q1.

However, this hole-cutting process can result in a nick (burn through) formed at the point Q1 corresponding both to the start point of the hole-circumference cutting and the end point of same, as shown in FIG 4(B). The nick is formed by an excessive meltdown of a lower-side portion of a plate of the workpiece, and this makes the cut surface not perpendicular to the lower surface of the plate. The nick is more liable to occur as the thickness of the plate is larger. The existence of such a nick in a component part may not only cause a crack or breakage to a machined product due to stress concentrated thereon, but also impair an appearance of the machined product. Therefore, formation of a nick has been a disadvantage of the laser-beam machining.

On the other hand, to prevent formation of such a nick e.g. in a case of cutting off mild steel, a method is proposed which is characterized by switching assist gas from oxygen gas to air before the machining end point for blunting the cutting operation. This method, however, cannot achieve markedly advantageous effects. Further, an attempt has also been made to modify a machining path along the circumference of a shape to be cut, without achieving advantageous results, as well.

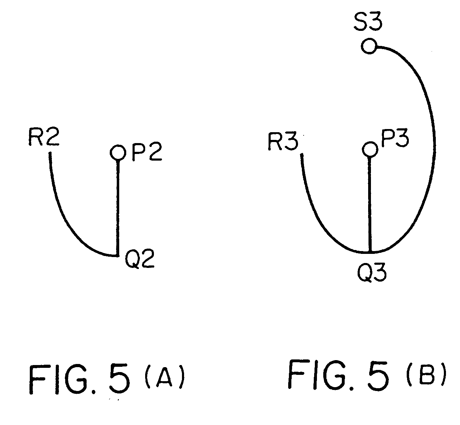

Under these circumstances, experiments as illustrated in FIG. 5(A) and FIG. 5(B) are made to investigate into the mechanism of formation of a nick. In an experiment shown in FIG. 5(A), piercing is effected at a point P2, and then cutting is performed via a point Q2 to a point R2. The point Q2 corresponds to a start point of the hole-circumference cutting. However, at this stage of a hole-cutting process, there is formed hardly any nick at the point Q2.

In an experiment shown in FIG. 5(B), piercing is effected at a point P3, and cutting is subsequently performed via a point Q3 to a point R3. Then, the cutting point is shifted to a point S3, and at this point, piercing is effected again, followed by cutting up to the point Q3, where the cutting operation is terminated. This machining process resulted in a nick formed at the point Q3 which corresponds both to the start point at which the hole-circumference cutting is started and the end point at which it is terminated. That is, it has been found that a nick is formed when a start point of circumference cutting is coincident with an end point of same.

### Disclosure of the Invention

The present invention has been made in view of these circumstances, and the object thereof is to provide a laser-beam machining method and a system therefor, which make it possible to perform machining without forming a nick, even in machining a shape having a machining start point and a machining end point coincident with each other.

To solve the above problems, the invention provides a laser-beam machining method of machining a workpiece by irradiating a laser beam thereon, which comprises the step of shifting the machining end point to a point in the vicinity of the machining start point, in machining a shape having a machining start point and a machining end point coincident with each other.

Further, the invention provides a laser-beam machining system for machining a workpiece by irradiating a laser beam thereon, which comprises laser-beam machining means for performing machining, when a shape having a machining start point and a machining end point coincident with each other is to be machined, based on a machining path obtained by shifting the machining end point to a point in the vicinity of the machining start point.

In machining a shape having a machining start point and a machining end point identical to each other, the laser beam machining is performed by shifting the machining end point to a point in the vicinity of the machining start point. According to the laser-beam machining, it is possible to prevent a nick from being formed since the machining start point and the machining end point are not coincident with each other.

### Brief Description of the Drawings

FIGS. 1(A) and 1(B) are schematic diagrams illustrating an overall construction for carrying out a laser-beam machining method according to the invention, in which FIG. 1(A) shows the overall construction, while FIG. 1(B) shows a machining path;
FIG. 2 is a flowchart of a procedure of processing executed according to the invention;
FIG. 3 is a diagram showing the whole arrangement of a laser-beam machining system;
FIGS. 4(A) and 4(B) are diagrams for illustrating a conventional process of cutting a hole, in which FIG. 4(A) shows a machining path, and FIG. 4(B) shows a point where a nick is formed; and
FIGS. 5(A) and 5(B) are diagrams for explaining a case in which a nick is formed, in which FIG. 5(A) shows a case in which no nick is formed, while FIG. 5(B) the case in which the nick is formed.

### Best Mode for Carrying Out the Invention

The invention will now be described in detail with reference to drawings showing an embodiment of the invention. An embodiment will be described with reference to the drawings.

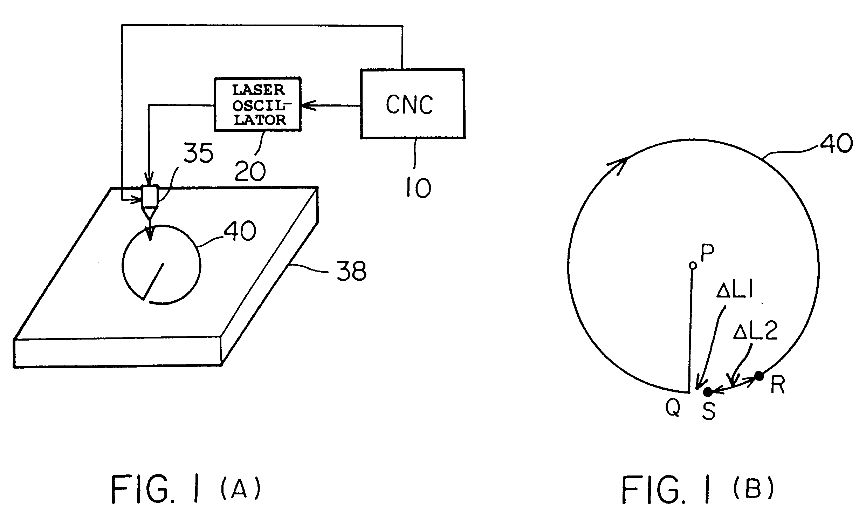

FIG. 1(A) and FIG. 1(B) schematically illustrate the overall construction for carrying out a laser-beam machining method according to the present invention. FIG. 1(A) shows the overall construction, while FIG. 1(B) shows a machining path. In FIG. 1(A), a CNC 10 controls the overall operation of a laser-beam machining system based on a machining program stored in a memory. That is, the CNC 10 sends a command signal to a laser oscillator 20 for control of the output of a laser beam and other operating parameters. It also sends command signals to a machining head 35 and a machining table, not shown, for control of destination and speed of movement of the machining head 35.

The machining head 35 condenses a laser beam from the laser oscillator 20 to emit the resulting laser beam onto a workpiece 38, and also moves along a machining path 40, to thereby effect hole-circumference cutting on the workpiece. This machining process will be described with reference to FIG. 1(B).

The hole circumference-machining process starts by piercing at a point P designated in FIG. 1(B). Then, cutting is performed from the point P to a point Q. Hole-circumference cutting is started at the point Q along the machining path 40 up to a point R. At the point R, machining conditions are modified, and when the cutting point reaches a point S, the hole-circumference cutting is terminated.

Prior to carrying out the hole circumference-machining process, the CNC 10 generates the machining path by eliminating a very small distance ΔL1 between the point Q and the point S from a machining path corresponding to the whole circumference of the hole, and stores the machining path 40 in a memory. The very small distance ΔL1 is set to such a value as will permit smooth removal of a part within the circumference. It is usually set to a value of approximately 1 mm after completion of the machining.

Further, the CNC 10 sets the point R by tracing back the machining path 40 from the machining end point S by a predetermined distance ΔL2, to start modifying the machining conditions at this point R, e.g., such that the speed of movement of the cutting point is slowed down and the output power of the laser beam is reduced. This modification of machining conditions is effected in a stepwise manner. Alternatively, the modification may be performed more gradually from the point R up to the point S.

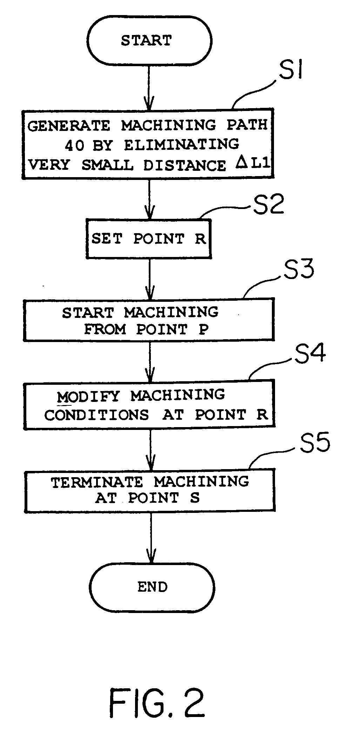

FIG. 2 shows a flowchart of a procedure of processing executed according to the invention. In the figure, numerals following "S" denote step numbers.
[S1] The end point S of the hole-circumference cutting is set by reducing a machining path backward from the start point Q by the very small distance ΔL1 to determine the machining path 40.
[S2] The point R is set by tracing back the machining path 40 from the end point S by a predetermined distance ΔL2.
[S3] Machining is started by piercing at the point Q, and enters a hole circumference-cutting mode at the point S. Cutting is continued along the machining path 40 up to the point R without any change.
[S4] The machining conditions are modified at the point R.
[S5] The machining is terminated at the point S.

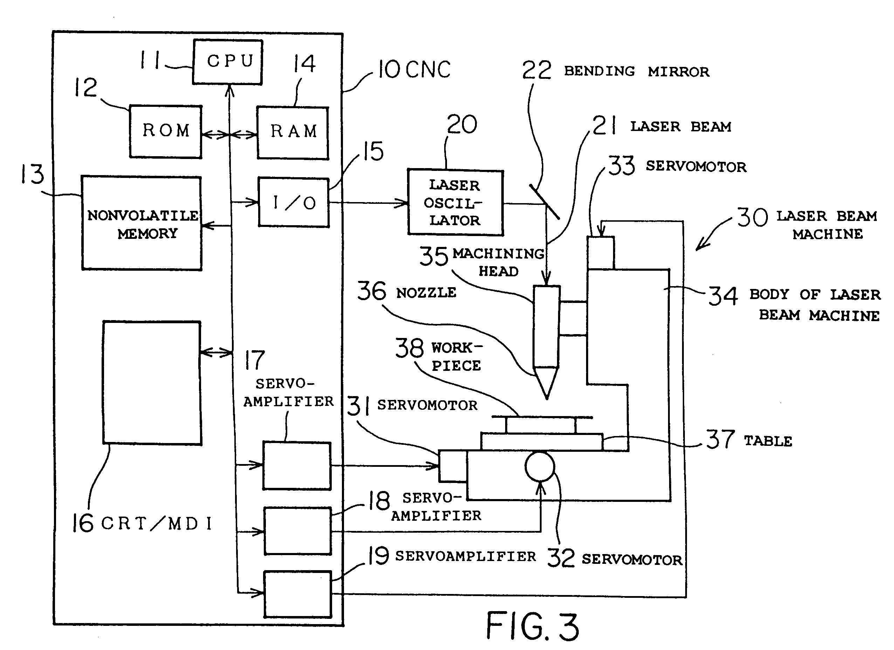

FIG. 3 shows the whole arrangement of the laser-beam machining system for carrying out the laser-beam machining method according to the present invention. As shown in the figure, the laser-beam machining system is composed of a numerical control system (CNC) 10, a laser oscillator 20, and a laser beam machine 30.

The CNC 10 has a processor 11 as a central component unit thereof. As a ROM 12, an EPROM or EEROM is used for storing a system program. As a nonvolatile memory 13, a CMOS backed up by a battery is used for storing machining programs, a program for executing the present invention, various operating parameters, and other programs to be held even after the power is turned off. The processor 11 reads out a machining program and the program for executing the method according to the present invention, to thereby control the overall operation of the laser-beam machining system.

An I/O unit 15 converts a control signal from the processor 11, and sends the resulting signal to the laser oscillator 20. The laser oscillator 20 emits a laser beam 21 in the form of pulses based on the converted control signal. The laser beam 21 is reflected from a bending mirror 22, and transmitted to the laser beam machine 30.

The CNC 10 also includes a CRT/MDI 16 connected thereto for interactively inputting various programs and data therefrom.

The laser beam machine 30 comprises a body 34, a machining head 35 for irradiating the laser beam 21 onto a workpiece 38, and a table 37 for having the workpiece 38 fixed thereon. The laser beam 21 introduced into the machining head 35 is condensed, and subsequently emitted toward the workpiece 38 via a nozzle 36.

The body 34 of the laser beam machine 30 is provided with servomotors 31, 32 for control of movement of the table 37 in the two directions along an X-axis and a Y-axis. The body 34 is also provided with a servomotor 33 for control of movement of the machining head 35 in a Z-axis direction. These servomotor 31, 32, and 33 are connected to respective servoamplifiers 17, 18, and 19 arranged within the CNC 10 to have their rotations controlled by axial movement control signals from the processor 11. The table 37 and the machining head 35 are moved according to the rotations of the servomotors. The laser beam 21 emitted from the nozzle 36 draws a machining path on the workpiece 38 according to the movement of the table 37 to cut the workpiece to a predetermined shape.

Thus, according to the present embodiment, in carrying out the hole circumference-machining process, the end point S of a machining path for hole-circumference cutting is made different from the start point Q of the machining path, but the former is set by decreasing the machining path by a very small distance ΔL1. This makes it possible to prevent a nick (burn through) from being formed, which has conventionally been formed when a machining start point and a machining end point are coincident with each other. Thus, it is made possible to prevent occurrence of a crack or breakage caused by stress concentrated on such a nick, as well as to improve appearance of a machined product.

Further, according to the present embodiment, the point R is set to a point on the machining path slightly before the end point S thereof, and the machining conditions are modified at the point R. Therefore, it is possible to promptly terminate the machining operation at the end point S. This also makes it possible to more reliably prevent a nick from being formed at the point S.

Although in the above description, the end point S of the circumference cutting is set by decreasing the machining path along the circumference from the start point Q by the very small distance ΔL1, this is not limitative, but the end point S may be shifted to a desired point in the vicinity of the start point Q, e.g. to a point on the machining path along the circumference past the start point Q by a predetermined distance or to a point inside the circumference of the hole. In such cases as well, there can be obtained similar effects as obtained in the above-described case in which the end point S is set by reducing the machining path by the very small distance ΔL1, and hence it is possible to prevent a nick from being formed at the end point S.

As described heretofore, according to the present invention, in machining a shape which has a machining end point and a machining start point coincident with each other, the machining end point is set to a point in the vicinity of the machining start point to thereby perform laser-beam machining. As a result, it is possible to prevent a nick (burn through) from being formed, which has been conventionally formed when the machining start point and the machining end point are coincident with each other.

Accordingly, it is possible to prevent a crack or breakage from occurring to a machined product, which can be caused by stress concentrated on a nick, as well as to improve an appearance of the machined product.

## Claims

1. A laser-beam machining method of machining a workpiece by irradiating a laser beam thereon, comprising the step of:
shifting a machining end point to a point in the vicinity of a machining start point, in machining a shape having a machining start point and a machining end point coincident with each other.

2. A laser-beam machining method according to claim 1, wherein machining conditions are modified before said machining end point is reached.

3. A laser-beam machining system for machining a workpiece by irradiating a laser beam thereon, comprising:
laser-beam machining means for performing machining, when a shape having a machining start point and a machining end point coincident with each other is to be machined, based on a machining path obtained by shifting said machining end point to a point in the vicinity of said machining start point.

4. A laser-beam machining system according to claim 3, comprising:
machining condition-modifying means for modifying conditions of machining before said machining end point is reached.
